# EUROPÄISCHE PATENTANMELDUNG

(11) **EP 0 912 049 A1**
(43) Veröffentlichungstag der Anmeldung: **28.04.1999**
(21) Anmeldenummer: 98108993.1
(22) Anmeldetag: 18.05.1998
(51) Int. Cl.: H04N 5/44

(54) **Integriertes Empfangs-, Aufnahme- und Wiedergabegerät**

(30) Priorität: 25.10.1997 DE 29719037 U
(71) Anmelder: Peisler, Thomas, 47623 Kevelaer (DE)
(72) Erfinder: Peisler, Thomas, 47623 Kevelaer (DE)
(74) Vertreter: Berkenfeld, Helmut, Dipl.-Ing.

(57) **Zusammenfassung**

Bekannt sind Geräte zum Empfang, zum Aufzeichnen und zur Wiedergabe von Ton-, Bild- und Textsignalen. Bekannt sind solche Geräte mit elektrischen und elektronischen Empfangs-, Aufzeichnungs- und Wiedergabeeinrichtungen. Bekannt sind weiter PCs. Diese Geräte können weiter einen Telefon-, einen Kabel- und/oder einen Netzanschluß und einen Anschluß an eine Antenne und/oder eine Satellitenantenne aufweisen. Die Steuerung dieser Geräte mit einer Infrarot-Fernbedienung ist ebenfalls bekannt. Die Anwender dieser Geräte stellen sie zu Hause neben- und übereinander auf und verbinden sie durch Leitungen. Dies beansprucht viel Raum und sieht häßlich aus. Gemäß der Erfindung werden sämtliche Geräte in einem einzigen Gehäuse angeordnet, in diesem mechanisch befestigt und elektrisch miteinander verbunden. Sämtliche Geräte lassen sich mit einer einzigen Bedienungseinrichtung, gegebenenfalls einer Fernbedienung, von einer Stelle aus steuern.

## Beschreibung

Die Erfindung betrifft ein Gerät zum Empfang, zum Aufzeichnen und zur Wiedergabe von Ton-, Bild- und Textsignalen, mit einem Gehäuse, mit elektrischen und elektronischen Empfangs-, Aufzeichnungs- und Wiedergabeeinrichtungen, mit einem PC mit einem Telefon-, einem Kabel- und einem Netzanschluß, mit einem Anschluß an eine Antenne und an eine Satellitenantenne und mit einer Infrarot-Fernbedienung.

Vor Jahrzehnten gab es nur Rundfunkgeräte und Schallplattenspieler. In den 50er-Jahren kamen die Fernsehgeräte hinzu. Als nächstes bereicherten die Tonbandgeräte und dann die Videorecorder das Gebiet der Musikunterhaltung. Seit etwa zwanzig Jahren kommen fast ständig neue Geräte auf den Markt, die sich an das breite Publikum wenden und zum Empfang, zur Wiedergabe und auch zur Bearbeitung von Ton-, Bild- und Textsignalen oder einfach von Bild, Ton und Text geeignet sind. Der Anwender kauft die verschiedenen Geräte bei ihrem Erscheinen auf dem Markt und nach Maßgabe seiner finanziellen Möglichkeiten. Dies führt dazu, daß in vielen Wohnungen diese verschiedenen Geräte ohne oder nur in losem Zusammenhang stehen und der Anwender sie nur einzeln und ohne jegliche Verknüpfung in Betrieb setzen kann und muß. In ihrer Form und auch in ihren elektrischen und elektronischen Eigenschaften sind die Geräte nicht aufeinander abgestimmt. Manche geschulte Anwender haben sie extern über Leitungen miteinander verbunden. Aber auch dann handelt es sich nur um eine lose Zusammenstellung verschiedener Geräte. Dies beansprucht viel Raum, erschwert die Bedienung und sieht häßlich aus.

Der Erfinder hat sich die Aufgabe gestellt, diesen unschönen Zustand zu beenden. Der Anwender soll nur ein einziges Gerät erhalten, das sämtliche Funktionen ausübt, für die er bisher eine Vielzahl von verschiedenen Geräten benötigte.

Die Lösung für diese Aufgabe ergibt sich nach der Erfindung bei einem Gerät der eingangs genannten Gattung dadurch, daß sämtliche Empfangs-, Aufzeichnungs- und Wiedergabeeinrichtungen in einem einzigen Gehäuse angeordnet, in diesem mechanisch befestigt und elektrisch und elektronisch angeschlossen und mit von außen zugänglichen Bedienungseinrichtungen bedienbar sind.

Im einzelnen ist nach der Erfindung vorgesehen, daß das Gerät die folgenden Empfangs-, Aufzeichnungs- und Wiedergabe-einrichtungen enthält:
a) einen integrierten ISDN- oder analogen Modemanschluß für den unmittelbaren Internetzugang,
b) einen integrierten Satelliten-Empfänger oder wahlweise einen Kabel-TV-Empfänger,
c) einen integrierten Hardware-CD-I-MPEG-Player,
d) eine integrierte Soundkarte zur CD-Wiedergabe,
e) einen PC,
f) einen integrierten VGA-TV-Konverter einschließlich Scart-Anschluß an das vorhandene TV-Gerät oder den PC-Monitor,
g) ein integriertes 16/32-Bit Betriebssystem,
h) einen integrierten Festplattenspeicher,
i) ein integiertes CD-ROM-Laufwerk,
j) ein integriertes Disketten-Laufwerk,
k) eine externe multifunktionale Infrarot-Tastatur,
l) eine integrierte Capture-Karte zur Videobearbeitung und zum Abhalten von Videokonferenzen im Internet und
m) eine integrierte Satelliten-Datendecoder-Karte zum Empfang und zur Decodierung und Dekomprimierung von Daten via Satellit.
Die Infrarot-Fernbedienung sollte zweckmäßig die Eingabe von Buchstaben und Zahlen und damit auch von Texten zulassen. Im oder auf dem Gerät sollte ein TV-Bildschirm angeordnet werden. Zur Vereinfachung der Bedienung für den Anwender sollten sämtliche Einrichtungen elektrisch und elektronisch miteinander verknüpft sein.

Sämtliche Einrichtungen oder Module sind in einem einzigen Gehäuse raumsparend untergebracht. Der Anwender bedient sämtliche Einrichtungen mit einer einzigen Infrarot-Fernbedienung. Mit dieser einzigen Bedienung kann er sämtliche Funktionen abrufen. Die Fernbedienung enthält auch aktive Elemente. Damit kann der Anwender sämtliche Einrichtungen frei programmieren und auch die verschiedenen Fernsehsender auf ihm angenehme Kanäle legen.

Die vorstehend genannte integrierte Satelliten-Datendecoder-Karte erfüllt die folgende Funktion:

Das Internet erhält einen immer höheren Stellenwert innerhalb der Bevölkerung. Hieraus resultiert, daß immer mehr Internet-Zugänge geschaltet werden. Dieses Zuschalten neuer Internetzugänge bedeutet in der Praxis eine immer stärkere Belastung des "Netzes". Eine Vielzahl von Internet-Nutzern mochte sich jedoch lediglich über aktuelle Themen, wie zum Beispiel Tagesmeldungen aus Politik, Wirtschaft oder Sport, informieren. Um an diese Informationen zu gelangen, müssen sie in das Internet hinein und sehr lange Wartezeiten und somit gerade hier in Deutschland sehr hohe Telefongebühren in Kauf nehmen. Hier setzt die Erfindung an. Mit ihr werden aktuelle Informationen aus allen Interessenbereichen zur Verfügung gestellt. Diese Daten werden aus dem Internet aufgenommen und zentral auf einem Rechner abgelegt. Dieser Rechner ist mit einer Satelliten-Sendezentrale verbunden. Über ein angemietetes Satelliten-Frequenzband werden diese Daten vom Rechner über den Satelliten zum Empfänger gesandt. Empfänger ist jeder, der über eine Satellitenschüssel in Verbindung mit der erfindungsgemäßen Satelliten-Decoder-Karte verfügt.

Der Vorteil liegt darin begründet, daß der Nutzer nur einmal eine Vielzahl von Informationen abzurufen braucht. Dies geschieht mit einer erheblich höheren und stabileren Übertragungsrate als im Netz, und es fallen keine hohen Online-Telefongebühren an.

Ein weiterer Gesichtspunkt besteht darin, daß Filme im Internet aufgrund des instabilen Datenflusses nahezu nicht realisierbar sind. Es gibt hierzu Ansätze, aber die empfangenen Filmsequenzen laufen zwangsläufig sehr instabil. Erfindungsgemäß besteht jedoch die Möglichkeit, Bild- und Filmmaterial (Datenmaterial) so stark zu komprimieren, daß das Versenden dieses Datenmaterials auf dem gleichen Weg wie vorher beschrieben geschehen kann.

Gleichgültig, ob sich ein Nutzer oder zehntausend Nutzer zu-geschaltet haben, das Senden der Daten bleibt unverändert stabil. Im Internet sieht die Praxis so aus, daß beim Zurverfügungstellen von Filmmaterial ein Nutzer auf dem Server des Anbieters eine einigermaßen lauffähige Filmsequenz erhält. Greifen jedoch gleichzeitig zehn oder noch mehr Nutzer auf diesen Server zu, sinkt die Bildleistung rapide ab.

Das erfindungsgemäße System ermöglicht somit "PAY-TV"-Anbietern, Filmclubs via Satellit über kostengünstige Satelliten-Frequenzbänder aufzubauen. Die erfindungsgemäße Satelliten-Datendecoder-Karte ermöglicht somit erst den Empfang und das Sichtbarmachen der Daten auf dem TV-Gerät oder Monitor.

Das Blockschaltbild zeigt das erfindungsgemäße Gerät.

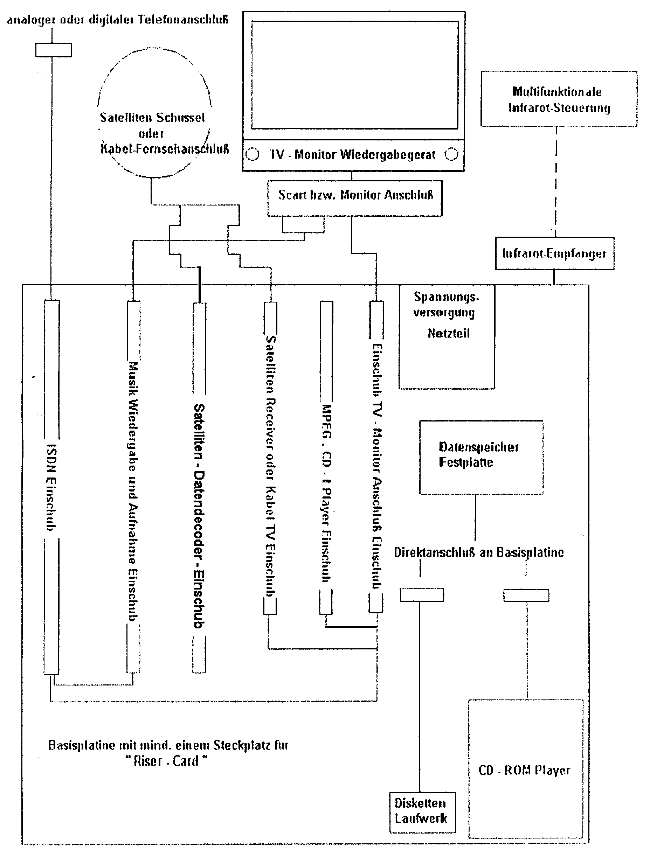

Das Gehäuse wird schematisch als Rechteck dargestellt. Außer-halb des Gehäuses und in der Zeichnung oben befinden sich der analoge oder digitale Telefonanschluß, die Satellitenschüssel oder der Kabelfernsehanschluß, der Scart- bzw. Monitoranschluß und das TV-Monitor-Wiedergabegerät. Oben rechts ist die multifunktionale Infrarotsteuerung bzw. das Fernsteuergerät eingezeichnet. Es beaufschlagt den Infrarotempfänger. Zur Vereinfachung der Darstellung ist dieser außerhalb des Gehäuses eingezeichnet.

Im Gehäuse befindet sich die Spannungsversorgung oder das Netzteil. Im Gehäuse befindet sich weiter der Datenspeicher, zum Beispiel eine Festplatte. Im Gehäuse befinden sich weiter ein Direktanschluß an die Basisplatine, ein Diskettenlaufwerk und ein CD-ROM-Player.

Im Gehäuse befinden sich weiter die vorstehend im einzelnen aufgeführten Einrichtungen, nämlich ein TV-Einschub, ein Nonitoranschluß-Einschub, ein MPEG,CD-I-Player-Einschub, ein Satelliten-Receiver- oder Kabel-TV-Einschub, ein Satelliten-Datendecoder-Einschub, ein Musikwiedergabe- und -aufnahme-Einschub und ein ISDN-Einschub. Das Blockschaltbild zeigt nicht die oben unter m) aufgeführte integrierte Satelliten-Datendecoder-Karte. Ebenso wie die Einschübe ist sie im Gehäuse angeordnet. Wie das Blockschaltbild andeutet, werden sämtliche Einschübe mechanisch geführt und gehalten und sind, sofern erforderlich, elektrisch miteinander verbunden.

## Patentansprüche

1. Gerät zum Empfang, zum Aufzeichnen und zur Wiedergabe von Ton-, Bild- und Textsignalen, mit einem Gehäuse, mit elektrischen und elektronischen Empfangs-, Aufzeichnungs- und Wiedergabeeinrichtungen, mit einem PC mit einem Telefon-, einem Kabel- und einem Netzanschluß, mit einem Anschluß an eine Antenne und an eine Satellitenantenne und mit einer Infrarot-Fernbedienung, dadurch gekennzeichnet, daß sämtliche Empfangs-, Aufzeichnungs- und Wiedergabeeinrichtungen in einem einzigen Gehäuse angeordnet, in diesem mechanisch befestigt und elektrisch und elektronisch angeschlossen und mit von außen zugänglichen Bedienungseinrichtungen bedienbar sind.

2. Gerät nach Anspruch 1, dadurch gekennzeichnet, daß es die folgenden Empfangs-, Aufzeichnungs- und Wiedergabeeinrichtungen enthält:
a) einen integrierten ISDN- oder analogen Modemanschluß für den unmittelbaren Internetzugang,
b) einen integrierten Satelliten-Empfänger oder wahlweise einen Kabel-TV-Empfänger,
c) einen integrierten Hardware-CD-I-MPEG-Player,
d) eine integrierte Soundkarte zur CD-Wiedergabe,
e) einen PC,
f) einen integrierten VGA-TV-Konverter einschließlich Scart-Anschluß an das vorhandene TV-Gerät oder den PC-Monitor,
g) ein integriertes 16/32-Bit Betriebssystem,
h) einen integrierten Festplattenspeicher,
i) ein integiertes CD-ROM-Laufwerk,
j) ein integriertes Disketten-Laufwerk,
k) eine externe multifunktionale Infrarot-Tastatur,
l) eine integrierte Capture-Karte zur Videobearbeitung und zum Abhalten von Videokonferenzen im Internet und
m) eine integrierte Satelliten-Datendecoder-Karte zum Empfang und zur Decodierung und Dekomprimierung von Daten via Satellit.

3. Gerät nach einem der Ansprüche 1 oder 2, dadurch gekennzeichnet, daß die Infrarot-Fernbedienung die Eingabe von Buchstaben und Zahlen zuläßt.

4. Gerät nach einem der Ansprüche 1 bis 3, gekennzeichnet durch einen im oder auf dem Gehäuse vorgesehenen TV-Bildschirm.

5. Gerät nach einem der Ansprüche 1 bis 4, dadurch gekennzeichent, daß die Einrichtungen elektrisch und elektronisch miteinander verknüpft sind.
